# EUROPEAN PATENT SPECIFICATION

(11) **EP 3 434 011 B1**
(45) Date of publication and mention of the grant of the patent: **10.08.2022**
(21) Application number: 17717930.6
(22) Date of filing: 21.03.2017
(51) Int. Cl.: H04N 7/18, G08B 13/196, H04N 21/218

(54) **METHOD AND SYSTEM FOR POOLED LOCAL STORAGE BY SURVEILLANCE CAMERAS**
VERFAHREN UND SYSTEM FÜR GEBÜNDELTE LOKALE LAGERUNG DURCH ÜBERWACHUNGSKAMERAS
PROCÉDÉ ET SYSTÈME DESTINÉS AU STOCKAGE LOCAL REGROUPÉ AU MOYEN DE CAMÉRAS DE SURVEILLANCE

(30) Priority: 22.03.2016 US 201615076703
(43) Date of publication of application: 30.01.2019
(73) Proprietor: Sensormatic Electronics, LLC, Boca Raton, FL 33431 (US)
(72) Inventor: BURKE, Anthony, Noblesville, Indiana 46062 (US)
(74) Representative: Wright, Howard Hugh Burnby
(86) International application number: PCT/US2017/023434
(87) International publication number: WO 2017/165431

(56) References cited:
- US-A1- 2006 181 612
- US-A1- 2013 343 731
- US-A1- 2015 358 576
- US-B1- 8 723 952

## Description

### BACKGROUND OF THE INVENTION

Historically, surveillance camera systems were often proprietary/closed-standards systems. Surveillance cameras were directly wired to a local video storage system and the image data from the cameras were compiled into a matrix view for real time viewing at possibly a security guard station or back office video monitor. Each camera typically required significant installation time and adjustment because of its "hard wired" connection. In addition, the local video storage system was typically a video cassette recorder (VCR) located in network room or the back office within the premises being monitored.

More recently, internet protocol (IP) surveillance cameras have become increasingly common. These cameras utilize standard protocols over wired and/or wireless networks. The captured image data is sent for storage in possibly a local network video recording (NVR) system, which may also distribute the image data for display.

Even more recently, surveillance cameras have been offered that include image data storage on the camera itself. Such surveillance cameras are especially attractive to smaller organizations such as stores, small companies, and local offices that want to reduce installation and maintenance expenses. Each camera can function as a stand-alone unit, and as a result there is no need to have a specialized image data storage system. With the advent of improved image compression on one hand, and the decreasing costs of data storage on the other hand, each surveillance camera is able to store substantially larger amounts of image data than it generates.

US 2015/358576 A1 concerns a monitoring system including monitoring cameras and a monitoring recorder. A search for the recordable and distributable equipment is performed and switching to the record recipient when the monitoring recorder is in the unrecordable state and the internal storage medium is unable to perform recording.

US 2013/343731 A1 discloses a system for utilizing storage in network video recorders. In the system several digital recorders use the same storage and a site manager receives storage parameters from edge camera devices.

### SUMMARY OF THE INVENTION

A problem arises when surveillance cameras that store their image data to their own image data storage are used in larger surveillance systems. The efficiency with which the cameras are able to compress the image data depends on the degree to which the field of view is dynamic. A surveillance camera monitoring an empty hallway will be able to store image data covering a much longer span of time before older image data is overwritten than a surveillance camera monitoring a busy sidewalk, assuming that the cameras have the same amount of internal image data storage capacity. Moreover, surveillance cameras may also have motion detection capabilities that enable the cameras to trigger storing of the image data only when the cameras detect motion in their fields of view, for example. From the standpoint of the surveillance systems, this allocation of resources may not be desirable. For example, maybe the image data from the busy sidewalk is more important than that of the empty hallway.

It would be beneficial to be able to configure the surveillance camera systems to extend their local storage capacity by using available storage resources of other surveillance cameras in the same system or other local or remote storage resources.

The present invention concerns a system for enabling surveillance cameras to allocate storage of image data in a distributed fashion across other surveillance cameras in the same system or across other local or remote storage resources. The allocation takes into account real-time information concerning available and/or required storage resources gained by and/or provided to the cameras.

In general, according to one aspect, the invention features a surveillance camera and image data storage system in accordance with independent claim 1. This system comprises a network of surveillance cameras generating image data and a storage allocation system tracking image data storage among the surveillance cameras and enabling the surveillance cameras to store the image data to other surveillance cameras of the network. The storage allocation system comprises at least one primary surveillance camera including a query engine for querying one or more secondary surveillance cameras for their device storage resources and a virtual storage controller for determining a distribution of the image data storage among the surveillance cameras based upon information concerning available and/or required storage resources of each of the surveillance cameras determined from the device storage resources sent from each of the secondary surveillance cameras, wherein the device storage resources for each of the secondary surveillance cameras include available storage resources of a camera image data storage system of that secondary surveillance camera and required storage resources based on an amount of image data designated for recording by that secondary surveillance camera.

In an embodiment, each secondary surveillance camera includes device storage for storing image data generated within each secondary surveillance camera and site virtual storage for storing image data generated by other surveillance cameras.

Preferably, the primary surveillance camera can have a device storage resource monitor that determines device storage resources for the primary surveillance camera.

In some embodiments, the virtual storage controller enables the surveillance cameras to store the image data to a cloud storage system.

In some embodiments, the storage allocation system comprises two or more surveillance cameras that each include: a device storage resource monitor that determines device storage resources for each of the surveillance cameras, and a distributed voting process for enabling the surveillance cameras to store the image data to other surveillance cameras of the network based on the device storage resources for each of the surveillance cameras using a voting protocol at a level of each of the surveillance cameras.

In some embodiments, the primary surveillance camera includes device storage for storing image data generated within the primary surveillance camera.

In general, according to another aspect, the invention features a surveillance camera image data storage method in accordance with independent claim 7. The method comprises generating image data with a network of surveillance cameras, tracking image data storage among the surveillance cameras, and enabling the surveillance cameras to store the image data to other surveillance cameras of the network. The primary surveillance camera queries one or more secondary surveillance cameras for their device storage resources and determines a distribution of the image data storage among the surveillance cameras based upon information concerning available and/or required storage resources of each of the surveillance cameras determined from the device storage resources sent from each of the secondary surveillance cameras, wherein the device storage resources for each of the secondary surveillance cameras include available storage resources of a camera image data storage system of that secondary surveillance camera and required storage resources based on an amount of image data designated for recording by that secondary surveillance camera. In some embodiments, the primary surveillance camera determines the device storage resources for itself. In some embodiments, the surveillance cameras further store the image data to a cloud storage system. In some embodiments, each surveillance camera includes device storage for storing image data generated within each surveillance camera and site virtual storage for storing image data generated by other surveillance cameras. In some embodiments, enabling the surveillance cameras to store the image data to other surveillance cameras of the network comprises: each of the surveillance cameras functioning as peer-to-peer surveillance cameras; each of the peer-to-peer surveillance cameras determining its own device storage resources; each of the peer-to-peer surveillance cameras implementing a voting protocol at a level of each of the peer-to-peer surveillance cameras; and storing the image data generated within each peer-to-peer surveillance camera to other peer-to-peer surveillance cameras based on the determined device storage resources via the voting protocol.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention,

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:
Fig. 1 is a schematic diagram showing a network or system of surveillance cameras installed at a client premises that store image data on each other's' device storage and/or to a cloud storage system;
Fig. 2 is a schematic diagram showing some of the components of primary and secondary surveillance cameras that enable the network of surveillance cameras to store their image data to other surveillance cameras of the network, according to one embodiment;
Fig. 3 is a schematic diagram showing another embodiment of the surveillance cameras, where the cameras operate in a peer-to-peer fashion to store their image data to other surveillance cameras of the network;
Fig. 4 is a schematic diagram showing another embodiment of the surveillance cameras, where storage of the image data across the cameras is controlled remotely via a process running on a cloud image data storage system that the surveillance cameras access over a network cloud; and
Fig. 5 shows available/required storage resources obtained for each of the surveillance cameras by a primary surveillance camera of the cameras, in accordance with the embodiment of Fig. 2, where the available/required storage resources for each of the cameras are included within a message queue of the primary surveillance camera.

### DETAILED DESCRIPTION OF THE PREFERRED EMBODIMENTS

The invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

As used herein, the term "and/or" includes any and all combinations of one or more of the associated listed items. Further, the singular forms including the articles "a", "an" and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence or addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

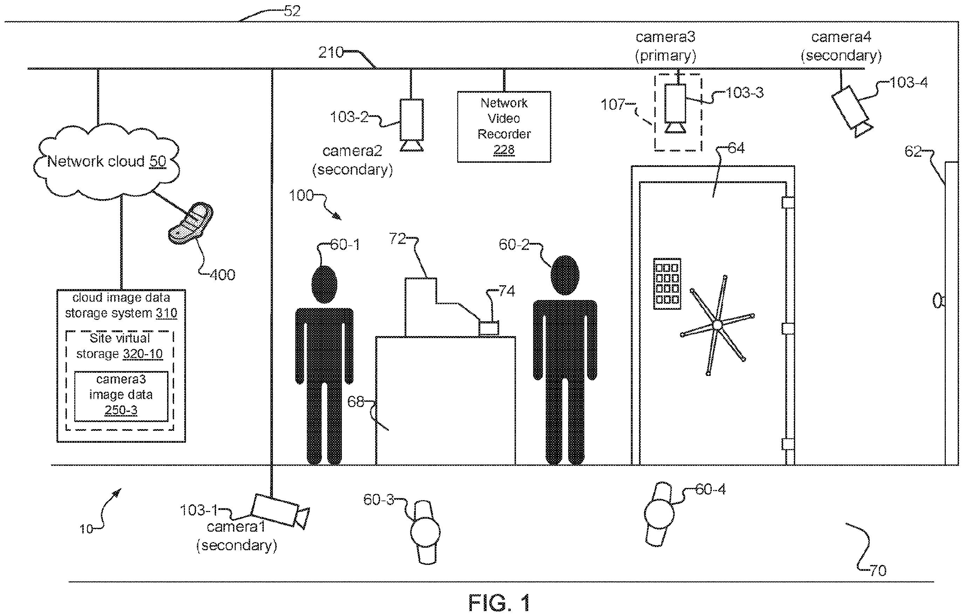

Fig. 1 shows an exemplary surveillance camera and image data storage system 10 to which the present invention is applicable. The illustrated example features a first embodiment of the surveillance cameras 103, where one of the cameras is designated as a primary surveillance camera that requests available storage resources from and coordinates storage of image data to other surveillance cameras designated as secondary surveillance cameras.

The system 10 includes surveillance cameras 103 and other security devices installed at a premises 52 of an organization. The surveillance cameras 103 generate image data 250 and communicate with each other and with other security devices over a local (enterprise) network 210 which may be wired, wireless, or a hybrid of wired and wireless links. Surveillance cameras with reference numbers 103-1 through 103-4 are associated with cameras "cameral" through "camera4," respectively. A network video recorder 228 might also be deployed on the local network 210.

The system 10 might also include a cloud image data storage system 310 accessible via a network cloud 50. The cloud image data storage system 310 is also known as a cloud storage system. The image data 250 can then be accessed over the network cloud 50 by user mobile computing devices 400 such as smartphones, tablet computing devices, laptop computer running operating systems such as Windows, Android, Linux, or IOS, in examples.

The cloud storage system 310 is typically managed by a third party hosting company and is presented to the enterprise local network 210 as a single virtual entity. Typically, the cloud storage system 310 is a distributed array of storage nodes that provide storage resources for enterprise clients in a dynamic fashion. The cloud storage system 310 can also be a computer system that additionally includes or provides the storage nodes/storage resources. Such a computing system includes one or more central processing units (CPUs), some form of memory, and an operating system. One or more applications or processes can then execute upon the operating system.

A specific example showing how the cameras 103 might be deployed is illustrated. Within the premises 52, camera1 103-1 focuses upon persons 60-3 and 60-4 located within an aisle 70 or entryway to the premises 52. Camera2 103-2 focuses upon a point of sale area 100 within the premises 52. The point of sale area 100 includes a cash register or point of sale terminal 72 located on top of a desk 68. Camera3 103-3 detects motion near a safe 64. Finally, camera4 103-4 can detect motion of individuals 60 near a door 62 providing entry to or exit from the premises 52.

The surveillance cameras 103 store their image data 250 locally within each of the cameras 103 and possibly to the network video recorder 228 over the local network 210, and to the cloud storage system 310 via the network cloud 50, if available. Each surveillance camera 103 can additionally store its image data 250 in a distributed fashion across one or more of the other surveillance cameras 103 according to the invention. For this purpose, a distributed storage allocation system is employed that is implemented at the level of the individual surveillance cameras 103, in one embodiment.

The storage allocation system applies rules and exchanges data and control information in messages between the surveillance cameras. The data information includes information concerning available and/or required storage resources within the surveillance cameras 103. The rules determine the distribution of storage of the image data based upon the information concerning available and/or required storage resources within the surveillance cameras 103 and may implement the business objectives of the organization deploying the system. Then, in accordance with the rules, the control information specifies how the cameras 103 should implement the distributed storage of the image data at the level of the individual surveillance cameras 103.

In one example, instead of camera1 103-1 storing its image data locally, camera1 103-1 can distribute storage of its image data 250 across one or more surveillance cameras 103-2 through 103-4. In another example, camera3 103-3 stores its image data locally until its local storage is full, and then stores its image data 250 to the cloud storage system 310. In this example, the cloud storage system 310 maintains site virtual storage 320-10 that includes the image data 250-3 from camera3.

According to the current embodiment, when one or more surveillance cameras 103 distribute storage of their image data, one of the surveillance cameras, here camera3 103-3, is designated as the primary surveillance camera and is indicated by reference 107. All other surveillance cameras 103 (e.g. cameral, camera2 and camera4) are designated as secondary surveillance cameras 103.

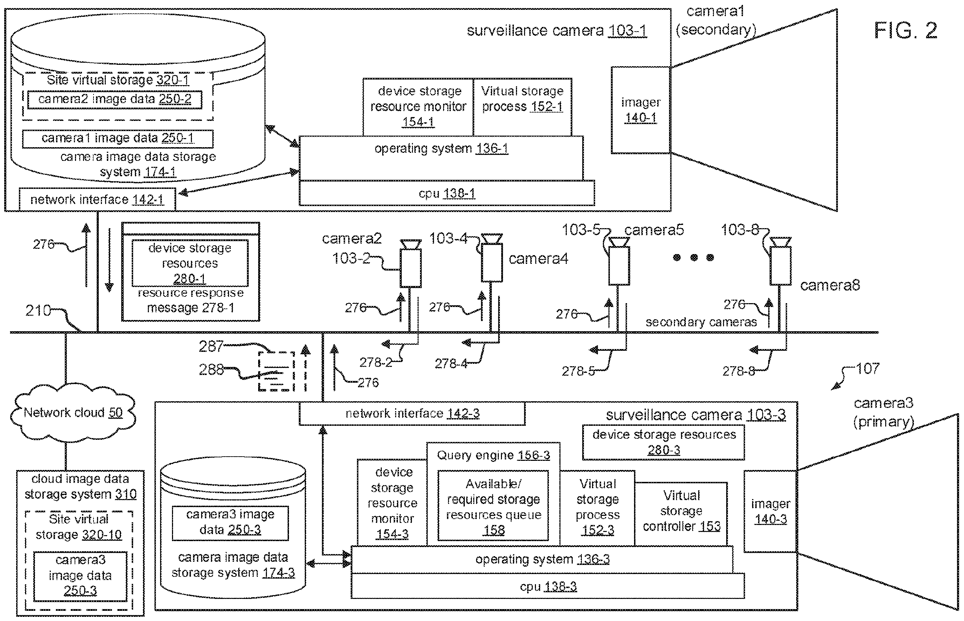

Fig. 2 shows one embodiment of the surveillance cameras, where one of the cameras 103 is designated as a primary surveillance camera and the remaining cameras are designated as secondary surveillance cameras. Specifically, detail for some of the components of surveillance cameras such as camera1 103-1 (secondary) and camera3 103-3 (primary) are shown. Other surveillance cameras 103 that communicate over the network 210 are designated as secondary surveillance cameras and include camera2 103-2, and camera4 - camera8 (103-4 through 103-8) and are shown in lesser detail.

By way of overview, in the illustrated example, each of the cameras 103 include a processing unit (CPU) 138, an imager 140 that generates the image data of the camera's field of view, a camera image data storage system 174 and a network interface 142. An operating system 136 runs on top of the CPU 138. Each surveillance camera 103 can store image data 250 locally to its camera image data storage system 174 and/or across the camera storage systems 174 of other surveillance cameras 103. In examples, the camera image data storage system 174 is onboard non-volatile (e.g., flash) memory, removable flash memory and/or a hard drive.

The storage allocation system enables the surveillance cameras 103 to allocate storage of their image data 250 across other surveillance cameras 103 within the same enterprise network 210 and/or to a local (enterprise) image storage system and/or remotely to a cloud storage system 310 and/or other remote cameras. The storage allocation system is preferably a distributed system executing instructions and exchanging messages that is implemented at the level of the individual surveillance cameras 103. To implement the storage allocation system, one of the surveillance cameras 103 is, in this example, preferably designated as the primary surveillance camera 107, and all other surveillance cameras 103 are designated as secondary surveillance cameras.

The storage allocation system establishes a "source/sink" image data storage dynamic among the surveillance cameras 103. Via rules within the primary surveillance camera 107, the storage allocation system determines which of the surveillance camera(s) 103 will function as "sinks" for receiving and storing image data from other surveillance camera(s) and which will be sources for sending their image data to be stored on other surveillance cameras 103. In this hierarchy, any of the primary 107 or secondary surveillance cameras can function as a source, and any of the secondary surveillance cameras can function as a sink.

In still other examples, the image data is stored in a distributed fashion for redundancy to ensure no image data is lost even if one of the cameras is destroyed or stolen.

In the illustrated example, camera3 103-3 is designated as the primary surveillance camera 107. All other surveillance cameras 103 in the local network 210, such as camera1 103-1, camera2 103-2, and camera4 through camera8 (103-4 through 103-8) are designated as secondary surveillance cameras. In one implementation, an operator predefines or configures the primary surveillance camera 107. In another implementation, the surveillance cameras 103 negotiate their roles as primary 107 or secondary surveillance cameras by exchanging messages over the network 210 that include unique metrics associated with each of the cameras. The exchange of metrics enables the surveillance cameras 103 to dynamically determine which of the cameras is the primary surveillance camera 107. Moreover, some embodiments provide for failover, in which another of the surveillance cameras assumes the role of the primary should the current primary camera fail or resign from the role as primary.

In the illustrated example, camera1 103-1 stores its image data 250-1 to its own camera storage system 174-1, but also stores image data 250-2 from camera2 to site virtual storage 320-1 within its camera storage system 174-1. Camera3 103-3 stores its image data 250-3 to its own camera storage system 174-3. In addition, camera3 stores its image data 250-3 remotely across the network cloud 50 to site virtual storage 320-10 of the cloud storage system 310. In this way, the storage of the system including the on-board image data storage of the cameras is pooled into a virtualized storage system for the organization.

A number of processes or applications are executed by the operating system 136 within each of the surveillance cameras 103 in order to implement this virtualized storage system. When a surveillance camera 103 such as camera3 acts as the primary surveillance camera 107, in one implementation, relevant processes include a device storage resource monitor 154-3, a query engine 156-3, a virtual storage process 152-3, and a virtual storage controller 153. When a surveillance camera 103 such as camera1 acts as a secondary surveillance camera, relevant processes include a device storage resource monitor 154-1 and virtual storage process 152-1.

The device storage resource monitor 154 within each secondary surveillance camera 103 maintains and updates the device storage resources 280 of each secondary surveillance camera 103. The device storage resources 280 include available storage resources of the camera image data storage system 174, and required storage resources based on the amount of image data 250 designated for recording (e.g. to be stored).

In one example, the required storage resources for each surveillance camera 103 are preconfigured and adjusted by an operator, possibly as part of a setup or configuration. A camera might be configured to have low required storage resources when the surveillance camera 103 monitors a low activity area with minimal detected motion. Preferably, the device storage resource monitor 154 calculates the required storage resources based on the amount of image data designated for recording. In one example, the device storage resource monitor 154 calculates the required storage resources based on the average amount of image data designated for recording over a selected time period. In this way, the required storage resources are based on typical/expected behavior within the area monitored by each surveillance camera 103.

After establishing the primary 107 and secondary surveillance cameras 103, the primary surveillance camera 107 of the storage allocation system uses its query engine 156-3 to periodically send a storage query message 276 to each of the secondary surveillance cameras 103. The storage query message 276 requests device storage resources 280 of the secondary surveillance cameras 103. In one implementation, the storage query message 276 is a broadcast message sent across the local network 210.

In response, each secondary surveillance camera 103 sends a resource response message 278 including its device storage resources 280 to the primary surveillance camera 107. In the illustrated example, detail for resource response message 278-1 is shown, which includes device storage resources 280-1 for camera1. Resource response messages 278-2 and 278-4 through 278-8 are shown in lesser detail, sent by camera2 and camera4 through camera8 (103-4 through 103-8), respectively.

The virtual storage controller 153 of the primary surveillance camera 107 extracts the device storage resources 280 in the resource response messages 278 sent from each of the secondary surveillance cameras 103. Then, the virtual storage controller 153 includes the extracted device storage resources 280 in an available/required storage resources queue 158. The virtual storage controller 153 then directs the virtual storage process 152-3 of the primary surveillance camera 107 to add the device storage resources 280-3 of the primary surveillance camera 107 to the queue 158. In a preferred implementation, the function provided by the virtual storage controller 153 is implemented within the virtual storage process 152-3 of the primary surveillance camera 107.

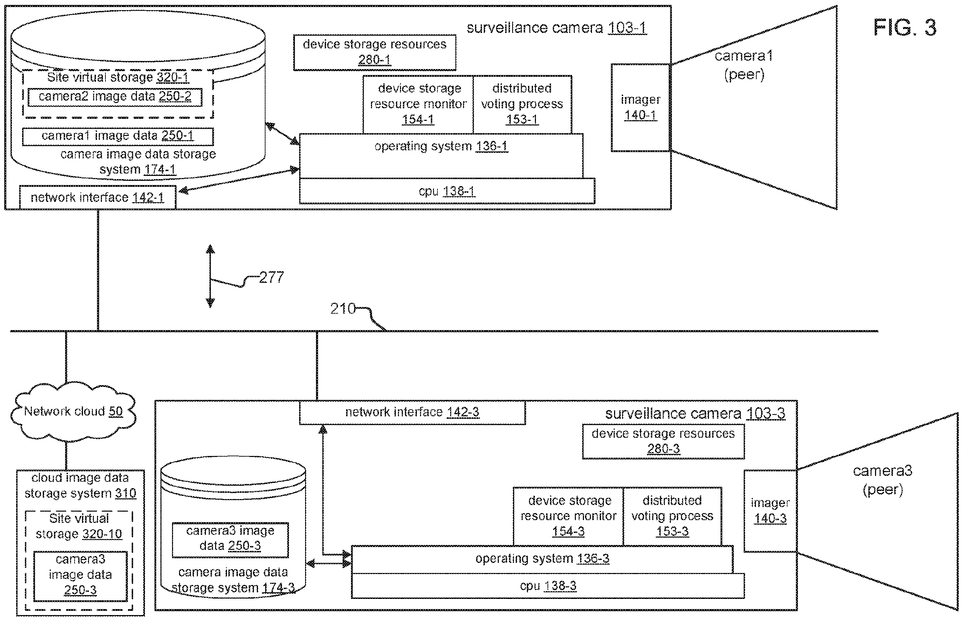

Fig. 3 shows another embodiment of the surveillance cameras 103, where two or more surveillance cameras operate in a peer-to-peer fashion to distribute image data 250 among the surveillance cameras 103 of the system 10. The peer surveillance cameras 103 typically store their image data 250 to other surveillance cameras of the network using distributed algorithms. In one example, the distributed algorithm is a voting protocol 277 implemented at the level of the individual surveillance cameras 103.

As in the primary/secondary embodiment of the cameras 103 in Fig. 2, each peer camera 103 in Fig. 3 includes a device storage resource monitor 154 process that maintains and updates the device storage resources 280 of each surveillance camera 103. Unlike the cameras 103 of Fig. 2, however, each of the peer cameras 103 includes a distributed voting process 153 that implements the voting protocol 277 at the level of the individual cameras 103. The distributed voting process 153 enables the surveillance cameras 103 to store the image data 250 to other surveillance cameras 103 of the network 210 based on the device storage resources 280 for each of the surveillance cameras 103.

In another example, each of the peer surveillance cameras 103 can announce their available device storage resources 280 to the other peer cameras. When one of the cameras 103 requires storage of image data beyond its camera image data storage system 174, the camera 103 can send its image data 250 to a destination peer camera 103 based on the available device storage resources 280 in the announcement messages. The device storage resource monitor 154 process in each of the cameras then updates the device storage resources 280 of each surveillance camera 103 for subsequent announcement messages.

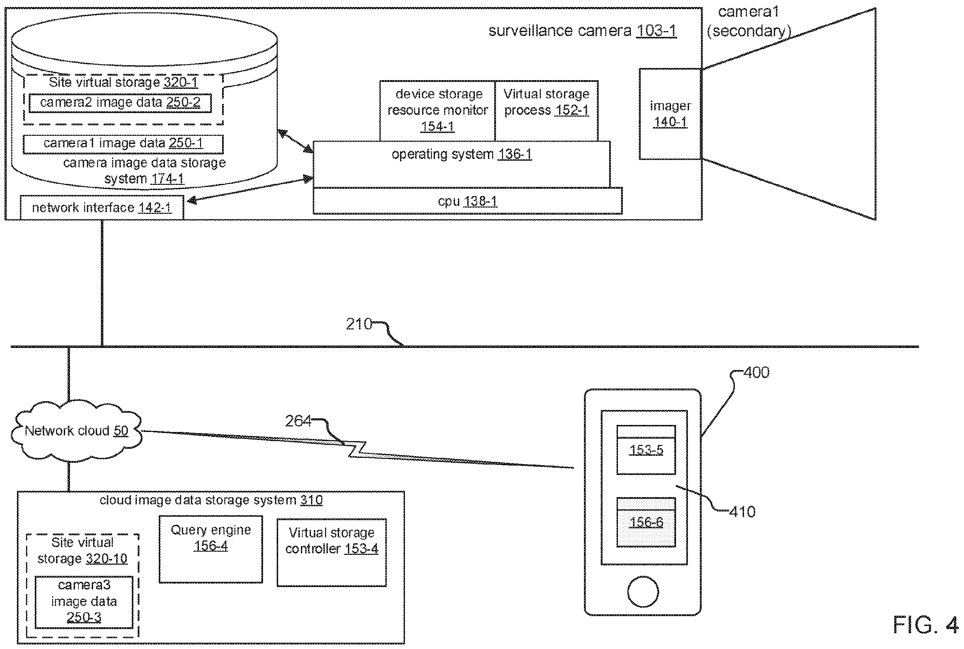

Fig. 4 shows yet another embodiment of the surveillance cameras 103. Here, processes such as the query engine 156-4 and the virtual storage controller 153-4 typically attributed to a primary surveillance camera 103 are included as part of the cloud image data storage system 310. In this way, storage of image data 250 across the surveillance cameras 103 can be controlled remotely over a network cloud 50.

In yet another example, user devices 400 such as mobile phones, laptops and tablet devices communicate with the surveillance cameras 103 over the network cloud 50 via wireless messages 264. The user devices 400, in turn, include versions of the query engine 156-6 and virtual storage controller 153-6 that execute on the user devices 400. The query engine 156-6 and virtual storage controller 153-6 control storage of image data 250 across the surveillance cameras 103, to network-based storage systems located on the network 210, and/or to the cloud storage system 310, in examples. The user devices 400 include a display screen 410 from which an installer can interact with the query engine 156-6 and virtual storage controller 153-6 to control storage of the image data 250 in the system 10.

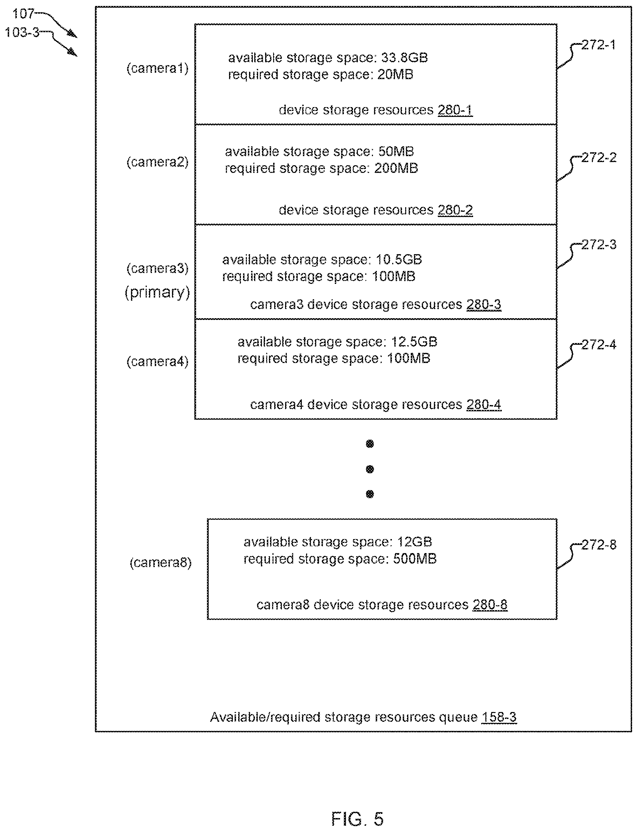

Fig. 5 shows detail for the available/required storage resources queue 158 maintained by the primary surveillance camera 107 (camera3 103-3) of the allocation storage system. Each entry 272 includes the device storage resources 280 for an individual surveillance camera 103. In other examples, the queue is maintained by all of the cameras in a distributed system.

Entries 272-1 through 272-8 are shown. Entries 272-1 and 272-2 include device storage resources 280-1 and 280-2 of secondary surveillance camera1 103-1 and camera2 103-2, respectively. Entry 272-3 includes device storage resources 280-3 of primary surveillance camera3 103-3. In a similar vein, entries 272-4 through 272-8 include device storage resources 280-4 through 280-8 of secondary surveillance camera4 103-4 through camera8 103-8, respectively.

In one example, entry 272-2 shows the device storage resources 280-2 of secondary camera2 103-2. Camera2 103-2 has 50 megabytes (MB) of available (e.g. remaining) storage space in its camera image data storage system 174-2, but requires 200MB to store its image data 250-2. Because camera2 103-2 requires more storage than it locally has available, camera2 103-2 is a likely "source" candidate for the storage allocation system. The storage allocation system can then distribute storage of the image data 250-2 of camera2 103-2 across one or more secondary surveillance cameras 103.

In another example, entry 272-1 shows the device storage resources 280-1 of secondary camera1 103-1. Camera1 103-1 has 33.8 gigabytes (GB) of available storage space in its camera image data storage system 174-1 but requires only 10MB to store its image data 250-2. Because camera2 103-2 has a large amount of storage available, camera2 103-2 is a prime "sink" candidate of the storage allocation system. The storage allocation system can designate camera2 103-2 as a sink to meet the storage requirements of camera 1 103-1 by distributing the storage of image data 250-1 from source camera1 103-1 to the camera image data storage system 174-2 of sink camera2 103-2.

Returning to Fig. 2, the virtual storage controller 153 of the primary surveillance camera 107 then reads the device storage resources 280 within the entries 272 of the queue 158. For designating the surveillance cameras 103 as either source or sink surveillance cameras 103, the virtual storage controller 153 includes rules.

The rules determine the distribution of storage of the image data 250 across the surveillance cameras 103, based upon information concerning available and/or required storage resources of the each of the surveillance cameras 103 provided within the queue 158. The designation of surveillance cameras 103 as source or sink by the virtual storage controller 153, in one example, enables the secondary surveillance cameras 103 to balance storage of their image data 250 across one or more of the secondary surveillance cameras 103.

The rules of the virtual storage controller 153 then create control messages 287 for each of the secondary surveillance cameras 103 designated as source and sink surveillance cameras 103. The control messages 287 include instructions 288. The secondary surveillance cameras 103 receive the control messages 287 and extract the instructions 288. The virtual storage process 152 of each secondary surveillance camera 103 then executes the instructions 288.

It is important to note that if the primary surveillance camera 107 is designated as a source surveillance camera 103, the virtual storage controller 153 directs the virtual storage process 152-3 to execute the associated instructions 288 directly. This avoids unnecessary overhead of the primary surveillance camera 107 for sending and processing control messages 287 including the instructions 288 to accomplish same.

In one implementation, the control messages 287 include instructions 288 to establish a connection such as a socket between the source and sink surveillance camera(s) 103. The instructions 288 also specify the amount of storage to allocate on the one or more sink surveillance cameras 103, where the amount of storage to allocate is based on the required storage resources of the source surveillance camera 103. In response to receiving the control messages 279, the virtual storage process 152 within each secondary surveillance camera 103 extracts the instructions 288 and executes the instructions 288 as directed by the virtual storage controller 153.

Each of the surveillance cameras 103 can also store their image data 250 to the cloud storage system 310 and/or local image data storage on the NVR 228, for example. In one mode of operation of the storage allocation system, the virtual storage controller 153 of the primary surveillance camera 107 treats the cloud storage system 310 as a "sink of last resort." This could occur, in one example, when one of the designated source surveillance cameras, such as camera3 103-3, requires more storage for its image data 250-3 than is locally available within its own camera image data storage system 174-3. However, if the rules of the virtual storage controller 153 determine from the queue 158 that none of the other surveillance cameras 103 have available storage resources, the virtual storage controller 153 executes instructions to store the image data 250-3 to the site virtual storage 320-10 of cloud storage system 310 as a default, assuming that none of the stored image data can be overwritten according to the business rules of the system.

When an operator or user 60 of the system 10 requests image data 250 from a particular surveillance camera 103 via a user mobile computing device 400, the primary surveillance camera 107 receives the request. Via its virtual storage controller 153, the primary surveillance camera 107 then determines which of the surveillance camera(s) 103 and/or whether the cloud storage system 310 includes the requested image data 250. Then, the virtual storage controller 153 provides a stream of the image data 250 to the mobile phone 400 that includes the relevant image data 250 distributed across the surveillance camera(s) 103 and/or across the cloud storage system 310 that meets the user request.

The virtual storage controller 153 of the storage allocation system also deletes image data 250 across the camera storage systems 174 of the secondary surveillance cameras 103. The virtual storage controller 153 deletes the image data in an attempt to free available storage resources on the secondary surveillance cameras 103 based on the business rules governing how image data is to be retained and the priority for retaining the image data of the different cameras. Using the available/required storage resources determined from the device storage resources 280 sent from each of the secondary surveillance cameras 103, the virtual storage controller 153 can determine which of the secondary surveillance cameras 103 have the highest required storage resources and which have the lowest required storage resources. Then, via the same control message 288 infrastructure of the storage allocation system used to direct storing of image data across other surveillance cameras 103, the controller 153 can direct one or more surveillance cameras 103 to delete locally stored frames of image data 250.

To illustrate this with an example, with camera2 103-2 now acting as the primary 107, the virtual storage controller 153 of camera2 103-2 can designate the image data 250-1 of camera1 103-1 as being "high priority" image data and can designate the image data 250-3 of camera3 103-3 as being " low priority" image data. These priorities will typically be dictated by business rules governing the system. Such business rules might be to 1) retain image data of the safe 64 for two weeks, and 2) delete image data including customers 60-1 at the end of each business day. Because camera1 103-3 was determined to have low priority image data 250, the virtual storage controller 153 might send a control message 288 to camera3 103-3. The control message 288 would include instructions 287 for the virtual storage process 152-3 of camera3 103-3 to delete selected portions of its image data 250-3 from the camera image data storage system 174-3 of camera3 103-3, in one implementation. When the queue 158 is next updated to reflect the newly available storage resources on secondary surveillance camera 103-1, the storage allocation system will determine that camera3 103-3-1 has more available storage resources and can designate camera3 103-1 as a sink to receive and store the higher priority image data 250-1 of camera1 103-1.

While this invention has been particularly shown and described with references to preferred embodiments thereof, it will be understood by those skilled in the art that various changes in form and details may be made therein without departing from the scope of the invention encompassed by the appended claims.

## Claims

1. A surveillance camera and image data storage system, comprising:
a network of surveillance cameras (103, 107) generating image data; and
a storage allocation system tracking image data storage among the surveillance cameras and enabling the surveillance cameras to store the image data to other surveillance cameras of the network;
**characterized in that** the storage allocation system comprises a primary surveillance camera (107), said primary surveillance camera including a query engine (156) for querying one or more secondary surveillance cameras for their device storage resources and a virtual storage controller (153) for determining a distribution of the image data storage among the surveillance cameras based upon information concerning available and/or required storage resources of each of the surveillance cameras determined from the device storage resources sent from each of the secondary surveillance cameras, wherein the device storage resources for each of the secondary surveillance cameras include available storage resources of a camera image data storage system of that secondary surveillance camera and required storage resources based on an amount of image data designated for recording by that secondary surveillance camera.

2. The system of claim 1, wherein each secondary surveillance camera includes device storage for storing image data generated within each secondary surveillance camera and site virtual storage for storing image data generated by other surveillance cameras.

3. The system of claim 1 or 2, wherein the primary surveillance camera further comprises a device storage resource monitor that determines device storage resources for the primary surveillance camera.

4. The system of any preceding claim, wherein the virtual storage controller enables the surveillance cameras to store the image data to a cloud storage system.

5. The system of any preceding claim, wherein the primary surveillance camera includes device storage for storing image data generated within the primary surveillance camera.

6. A surveillance camera image data storage method, comprising:
generating image data with a network of surveillance cameras;
tracking image data storage among the surveillance cameras;
enabling the surveillance cameras to store the image data to other surveillance cameras of the network;
a primary surveillance camera querying one or more secondary surveillance cameras for their device storage resources; and
the primary surveillance camera determining a distribution of the image data storage among the surveillance cameras based upon information concerning available and/or required storage resources of each of the surveillance cameras determined from the device storage resources sent from each of the secondary surveillance cameras, wherein the device storage resources for each of the secondary surveillance cameras include available storage resources of a camera image data storage system of that secondary surveillance camera and required storage resources based on an amount of image data designated for recording by that secondary surveillance camera.

7. The method of claim 6, further comprising:
storing the image data generated within each secondary surveillance camera to other surveillance cameras based on the determined device storage resources.

8. The method of claim 6 or 7, further comprising the primary surveillance camera determining the device storage resources for itself.

9. The method of claim 8, wherein the surveillance cameras further store the image data to a cloud storage system.

10. The method of claim 8, wherein each surveillance camera includes device storage for storing image data generated within each surveillance camera and site virtual storage for storing image data generated by other surveillance cameras.

## Patentansprüche

1. Überwachungskamera und Bilddatenspeichersystem, umfassend:
ein Netzwerk von Überwachungskameras (103, 107), die Bilddaten erzeugen; und
ein Speicherzuweisungssystem, das die Bilddatenspeicherung zwischen den Überwachungskameras verfolgt und die Überwachungskameras aktiviert, um die Bilddaten auf anderen Überwachungskameras des Netzwerks zu speichern;
**dadurch gekennzeichnet, dass** das Speicherzuweisungssystem eine primäre Überwachungskamera (107) umfasst, wobei die primäre Überwachungskamera eine Abfragemaschine (156) zum Abfragen einer oder mehrerer sekundärer Überwachungskameras nach ihren Gerätespeicherressourcen und eine virtuelle Speichersteuerung (153) zum Bestimmen einer Verteilung des Bilddatenspeichers unter den Überwachungskameras basierend auf verfügbaren Informationen und/oder erforderlichen Speicherressourcen jeder der Überwachungskameras enthält, die anhand der Gerätespeicherressourcen bestimmt werden, die von jeder der sekundären Überwachungskameras gesendet werden, wobei die Gerätespeicherressourcen für jede der sekundären Überwachungskameras verfügbare Speicherressourcen eines Kamerabilddatenspeichersystems dieser sekundären Überwachungskamera und erforderliche Speicherressourcen basierend auf einer Menge von Bilddaten enthalten, die zum Aufzeichnen durch diese sekundäre Überwachungskamera vorgesehen sind.

2. System nach Anspruch 1, wobei jede sekundäre Überwachungskamera einen Gerätespeicher zum Speichern von Bilddaten enthält, die in jeder sekundären Überwachungskamera erzeugt werden, und einen virtuellen Standortspeicher zum Speichern von Bilddaten, die von anderen Überwachungskameras erzeugt werden.

3. System nach Anspruch 1 oder 2, wobei die primäre Überwachungskamera ferner einen Gerätespeicherressourcenmonitor umfasst, der Gerätespeicherressourcen für die primäre Überwachungskamera bestimmt.

4. System nach einem der vorhergehenden Ansprüche, wobei die virtuelle Speichersteuerung es den Überwachungskameras ermöglicht, die Bilddaten in einem Cloud-Speichersystem zu speichern.

5. System nach einem der vorhergehenden Ansprüche, wobei die primäre Überwachungskamera einen Gerätespeicher zum Speichern von Bilddaten enthält, die in der primären Überwachungskamera erzeugt werden.

6. Verfahren zum Speichern von Bilddaten einer Überwachungskamera, umfassend:
Erzeugen von Bilddaten mit einem Netzwerk von Überwachungskameras;
Verfolgen der Bilddatenspeicherung zwischen den Überwachungskameras;
Ermöglichen, dass die Überwachungskameras die Bilddaten für andere Überwachungskameras des Netzwerks speichern;
eine primäre Überwachungskamera, die eine oder mehrere sekundäre Überwachungskameras nach ihren Gerätespeicherressourcen abfragt; und
wobei die primäre Überwachungskamera eine Verteilung des Bilddatenspeichers unter den Überwachungskameras basierend auf Informationen bezüglich verfügbarer und/oder erforderlicher Speicherressourcen jeder der Überwachungskameras bestimmt, die aus den Gerätespeicherressourcen bestimmt werden, die von jeder der sekundären Überwachungskameras gesendet werden,
wobei die Gerätespeicherressourcen für jede der sekundären Überwachungskameras verfügbare Speicherressourcen eines Kamerabilddatenspeichersystems dieser sekundären Überwachungskamera und erforderliche Speicherressourcen basierend auf einer Menge von Bilddaten enthalten, die zum Aufzeichnen durch diese sekundäre Überwachungskamera vorgesehen sind.

7. Verfahren nach Anspruch 6, ferner umfassend:
Speichern der in jeder sekundären Überwachungskamera erzeugten Bilddaten für andere Überwachungskameras basierend auf den ermittelten Gerätespeicherressourcen.

8. Verfahren nach Anspruch 6 oder 7, ferner umfassend, dass die primäre Überwachungskamera die Gerätespeicherressourcen für sich selbst bestimmt.

9. Verfahren nach Anspruch 8, wobei die Überwachungskameras ferner die Bilddaten in einem Cloud-Speichersystem speichern.

10. Verfahren nach Anspruch 8, wobei jede Überwachungskamera einen Gerätespeicher zum Speichern von Bilddaten, die in jeder Überwachungskamera erzeugt werden, und einen virtuellen Standortspeicher zum Speichern von Bilddaten umfasst, die von anderen Überwachungskameras erzeugt werden.

## Revendications

1. Caméra de surveillance et système de stockage de données d'images, comprenant :
un réseau de caméras de surveillance (103, 107) générant des données d'image ; et
un système d'allocation de stockage suivant le stockage de données d'image parmi les caméras de surveillance et permettant aux caméras de surveillance de stocker les données d'image dans d'autres caméras de surveillance du réseau ;
**caractérisés en ce que** le système d'allocation de stockage comprend une caméra de surveillance principale (107), ladite caméra de surveillance principale comportant un moteur d'interrogation (156) pour interroger une ou plusieurs caméras de surveillance secondaires sur leurs ressources de stockage de dispositif, et un dispositif de commande de stockage virtuel (153) pour déterminer une distribution du stockage de données d'image parmi les caméras de surveillance en fonction des informations concernant les ressources de stockage disponibles et/ou requises de chacune des caméras de surveillance déterminées à partir des ressources de stockage de dispositif envoyées par chacune des caméras de surveillance secondaires, dans lesquels les ressources de stockage de dispositif pour chacune des caméras de surveillance secondaires comportent les ressources de stockage disponibles d'un système de stockage de données d'image de caméra de cette caméra de surveillance secondaire et les ressources de stockage requises en fonction d'une quantité de données d'image désignée pour l'enregistrement par cette caméra de surveillance secondaire.

2. Système selon la revendication 1, dans lequel chaque caméra de surveillance secondaire comporte une mémoire de dispositif pour stocker des données d'image générées dans chaque caméra de surveillance secondaire et un stockage virtuel sur site pour stocker des données d'image générées par d'autres caméras de surveillance.

3. Système selon la revendication 1 ou 2, dans lequel la caméra de surveillance principale comprend en outre un moniteur de ressources de stockage de dispositif qui détermine les ressources de stockage de dispositif pour la caméra de surveillance principale.

4. Système selon une quelconque revendication précédente, dans lequel le dispositif de commande de stockage virtuel permet aux caméras de surveillance de stocker les données d'image dans un système de stockage en nuage.

5. Système selon une quelconque revendication précédente, dans lequel la caméra de surveillance principale comporte une mémoire de dispositif pour stocker des données d'image générées dans la caméra de surveillance principale.

6. Procédé de stockage de données d'image de caméra de surveillance, comprenant :
la génération de données d'image avec un réseau de caméras de surveillance ;
le suivi du stockage de données d'image parmi les caméras de surveillance ;
le fait de permettre aux caméras de surveillance de stocker les données d'image dans d'autres caméras de surveillance du réseau ;
une caméra de surveillance principale interrogeant une ou plusieurs caméras de surveillance secondaires sur leurs ressources de stockage de dispositif ; et
la caméra de surveillance principale déterminant une distribution du stockage de données d'image parmi les caméras de surveillance en fonction des informations concernant les ressources de stockage disponibles et/ou requises de chacune des caméras de surveillance déterminées à partir des ressources de stockage de dispositif envoyées par chacune des caméras de surveillance secondaires, dans lequel les ressources de stockage de dispositif pour chacune des caméras de surveillance secondaires comportent des ressources de stockage disponibles d'un système de stockage de données d'image de caméra de cette caméra de surveillance secondaire et des ressources de stockage requises en fonction d'une quantité de données d'image désignée pour être enregistrée par cette caméra de surveillance secondaire.

7. Procédé selon la revendication 6, comprenant en outre :
le stockage des données d'image générées dans chaque caméra de surveillance secondaire dans d'autres caméras de surveillance en fonction des ressources de stockage de dispositif déterminées.

8. Procédé selon la revendication 6 ou 7, comprenant en outre la caméra de surveillance principale déterminant ses propres ressources de stockage de dispositif.

9. Procédé selon la revendication 8, dans lequel les caméras de surveillance stockent en outre les données d'image dans un système de stockage en nuage.

10. Procédé selon la revendication 8, dans lequel chaque caméra de surveillance comporte une mémoire de dispositif pour stocker des données d'image générées dans chaque caméra de surveillance et un stockage virtuel sur site pour stocker des données d'image générées par d'autres caméras de surveillance.
